Europäisches Patentamt

European Patent Office

Office européen des brevets

(19)

(11) **EP 0 585 112 B1**

(12) **EUROPEAN PATENT SPECIFICATION**

(45) Date of publication and mention
of the grant of the patent:
**21.10.1998 Bulletin 1998/43**

(51) Int Cl.$^6$: **G09G 3/36**, G02F 1/136

(21) Application number: **93306736.5**

(22) Date of filing: **25.08.1993**

(54) **A driving circuit for an active matrix type display device and a method for driving the display device**

Treiberschaltung für eine Anzeige vom Typ Aktive Matrix und Verfahren zum Betreiben der Anzeige

Circuit d'entraînement pour un dispositif d'affichage du type matrice active et méthode pour l'entraînement du dispositif d'affichage

(84) Designated Contracting States:
**DE FR GB NL**

(30) Priority: **26.08.1992 JP 227637/92**

(43) Date of publication of application:
**02.03.1994 Bulletin 1994/09**

(73) Proprietor: **SHARP KABUSHIKI KAISHA
Osaka (JP)**

(72) Inventors:
• **Kumada, Koji
Tenri-shi, Nara-ken (JP)**

• **Yakushigawa, Hideki
Ikoma-shi, Nara-ken (JP)**
• **Ohnishi, Takashi
Tenri-shi, Nara-ken (JP)**

(74) Representative: **Suckling, Andrew Michael et al
Marks & Clerk,
Nash Court,
Oxford Business Park South
Oxford OX4 2RU (GB)**

(56) References cited:
**EP-A- 0 197 551         EP-A- 0 381 428
EP-A- 0 512 840**

## Description

The present invention relates to a driving circuit for a display device and a method for driving a display device by applying a signal to pixel electrodes through switching elements. More particularly, the present invention relates to a driving circuit for an active matrix type display device, in which pixel electrodes are arranged in a matrix, performing a display with high density and a method for driving the display device.

Conventionally, in a liquid crystal display device, an EL display device, and a plasma display device, a display pattern is formed on a screen by selectively driving pixel electrodes arranged in a matrix. When a pixel electrode is selected, a voltage is applied between the selected pixel electrode and a counter electrode thereof, whereby a display medium such as liquid crystal provided between these electrodes is optically modulated. This optical modulation is observed as a display pattern. As a method for driving a pixel electrode, an active matrix drive method is known. In this method, independent pixel electrodes are arranged in a matrix and switching elements are connected to the respective pixel electrodes, thereby driving each pixel electrode. Examples of the switching element selectively driving a pixel electrode generally include a thin film transistor (TFT), a metal-insulator-metal (MIM) element, a metal-oxide semiconductor (MOS) transistor element, and a diode variable resistor (varistor). The active matrix drive method has been put to practical use in a liquid crystal TV, a word processor, a terminal display device of a computer, etc. because of its ability to perform a display with a high contrast.

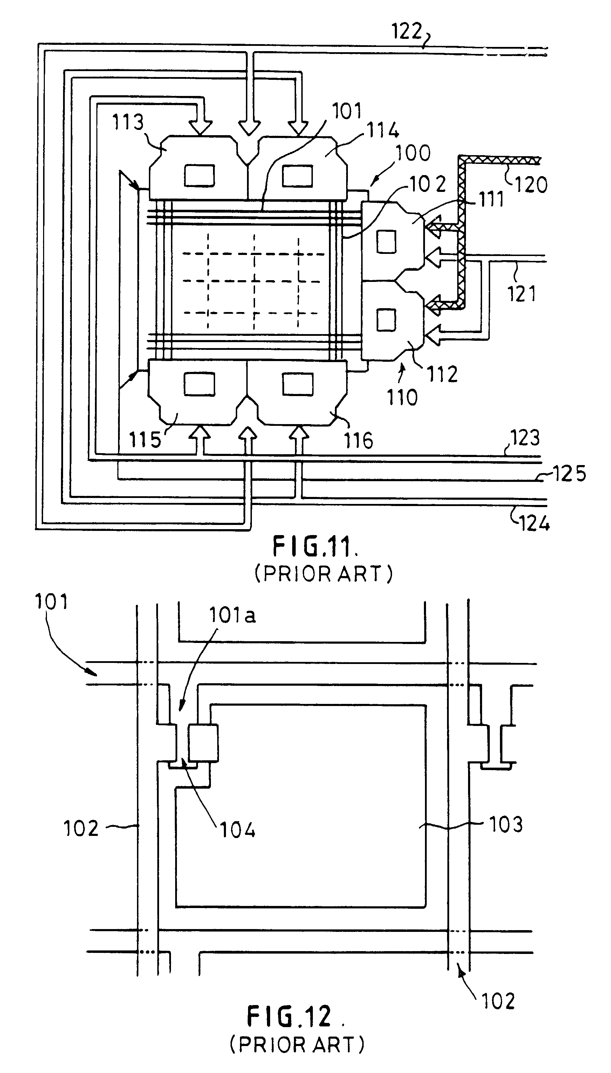

Figure 11 shows a conventional active matrix type liquid crystal display device 100 using a TFT element as a switching element and a driving circuit 110 provided thereto. This type of driving circuit is disclosed in, for example, U.S. Patent No. 5,111,195 (Fukuoka et al.). In the liquid crystal display device 100, an active matrix substrate and a counter substrate are provided so as to face each other and liquid crystal is sealed between the substrates as a display medium. Figure 12 is a plan view showing an active matrix substrate. In this substrate, gate bus lines 101 and source bus lines 102 are provided so as to cross each other. In the rectangular region formed by each gate bus line 101 and each source bus line 102, a pixel electrode 103 is provided. A TFT 104 as a switching element is connected to each pixel electrode 103. The TFT 104 is formed on a gate electrode 101a branched from the gate bus line 101.

As shown in Figure 11, the driving circuit 110 consists of six driving circuits: gate driving circuits 111 and 112, source driving circuits 113 and 114, and source driving circuits 115 and 116. The gate driving circuits 111 and 112 are connected to each end of the gate bus lines 101, the source driving circuits 113 and 114 are connected to each upper end of the source bus lines 102, and the source driving circuits 115 and 116 are connected to each lower end of the source bus lines 102.

A voltage 120 is applied from a gate driver power source to the gate driving circuits 111 and 112 and a gate driver control signal 121 is supplied thereto. The gate driving circuits 111 and 112 output a gate signal to the gate bus lines 101 based on the gate driver control signal 121. A voltage 122 is applied from a source driver power source to the source driving circuits 113, 114, 115, and 116. A source driver control signal 123 and a liquid crystal driving video signal (video signal) 124 are respectively supplied to the source driving circuits 113, 114, 115, and 116. The source driving circuits 113, 114, 115, and 116 output the video signal 124 to the source bus lines 102 based on the source driver control signal 123. A common electrode driving signal ($V_{com}$) 125 is applied to a counter electrode of the counter substrate.

In the case where a display with high density is performed by using a display device having the above-mentioned substrate, it is required that a great number of pixel electrodes 103 and TFTs 104 are arranged. However, in some cases, the TFT 104 formed on the substrate performs a maloperation. A pixel electrode connected to such a defective element has a point defect which negatively contributes to a display. The point defect remarkably deteriorates the image quality of the display device, resulting in a great decrease in yield of product.

In principle, there are the following two reasons for the point defect:

One defect is caused by a pixel electrode which is not sufficiently charged while the pixel electrode is selected by a scanning signal (hereinafter, referred to as the "ON defect"). The ON defect is caused by a TFT defect.

Another defect is caused by a charge leaking from a charged pixel electrode while a pixel electrode is not selected by a scanning signal (hereinafter, referred to as the "OFF defect"). The OFF defect is caused by the electrical leakage via a TFT or by the electrical leakage between pixel electrodes and bus lines.

When any one of the defects is caused, a required voltage is not applied between the pixel electrodes and the counter electrode, resulting in a point defect. This point defect is shown as a bright point in a normally white mode, in which light transmittance becomes maximum when the voltage to be applied between the pixel electrodes and the counter electrode is 0 V. On the other hand, the point defect is shown as a black point in a normally black mode, in which light transmittance becomes minimum when the voltage to be applied between the pixel electrodes and the counter electrode is 0 V.

EP-A-0 512 840 and Japanese Laid-Open Patent Publication No. 4-19618 disclose a method for correcting a pixel defect caused by the defect of a switching element. According to this method, the pixel defect is concealed by using a laser beam under the condition that a display device is assembled. More specifically, when a pixel defect caused by the ON defect or the OFF defect is detected, a switching element related to the pixel defect is disconnected from a scanning line by the irradiation of a laser beam, and an electrode on the side of a signal line with respect to the switching element is electrically connected to an electrode on the side of a pixel electrode with respect thereto, whereby the defective pixel electrode is directly connected to the signal line.

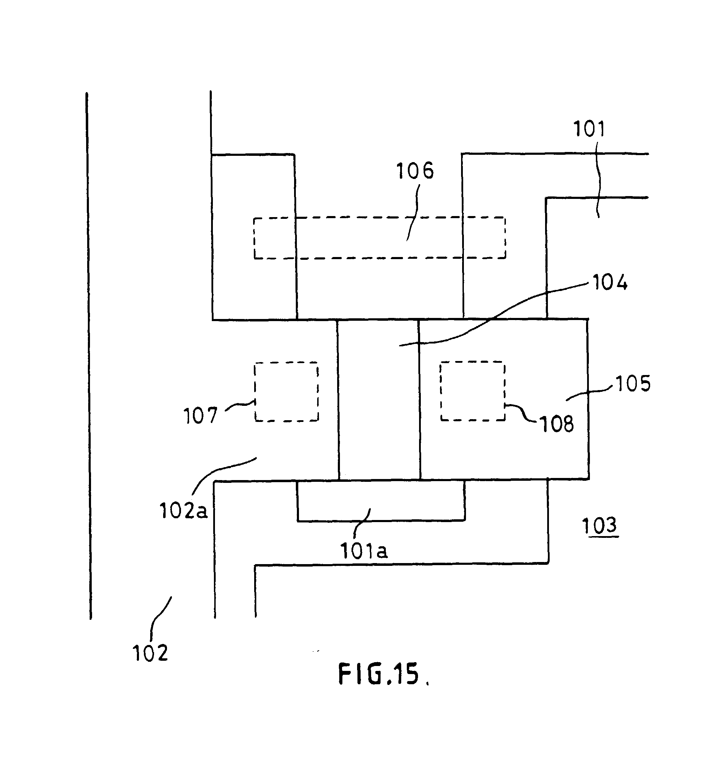

Figure **15** shows the case where a TFT is used as a switching element. In the case where the pixel defect occurs in the pixel electrode **103**, a laser beam is irradiated to a laser beam irradiation portion **106** provided on a branch line of the gate bus line **101** connected to the pixel electrode **103**, whereby the gate electrode **101a** is disconnected from the gate bus line **101**. Because of this disconnection, the TFT **104** is isolated from the gate bus line **101**. Moreover, a laser beam is irradiated to a laser beam irradiation portion **108** provided on a region where a drain electrode **105** overlaps the gate electrode **101a**, whereby the drain electrode **105** is electrically connected to the gate electrode **101a**. In the same way, a laser beam is irradiated to a laser beam irradiation portion **107** provided on a region where a source electrode **102a** of the source bus line **102** overlaps the gate electrode **101a**, whereby the source electrode **102a** is electrically connected to the gate electrode **101a**. In this way, the source electrode **102a** is electrically connected to the drain electrode **105**, whereby the source electrode **102a** is connected to the pixel electrode **103** via the isolated gate electrode **101a**. Thus, the TFT **104** is always in an ON state regardless of any gate signal transmitted from the gate bus line **101**, so that the video signal transmitted from the source bus line **102** is directly supplied to the pixel electrode **103**. Hereinafter, a pixel electrode thus connected to the signal line is referred to as "a corrected pixel electrode".

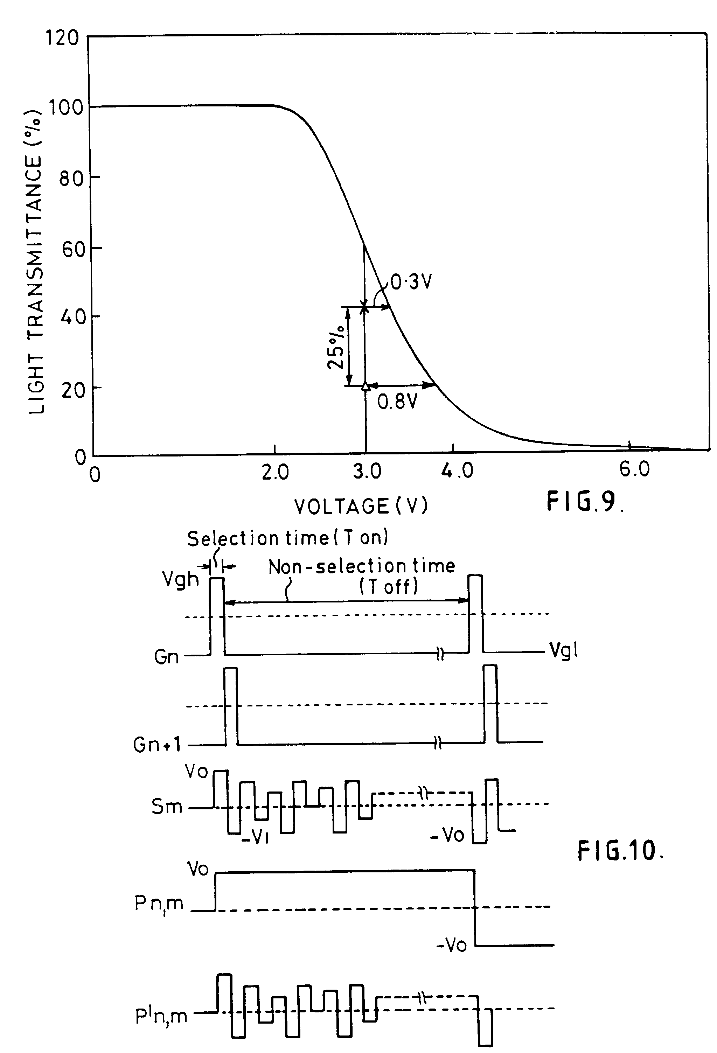

Voltage to be applied to a corrected pixel electrode will be described with reference to Figure **10**.

In Figure **10**, $G_n$ shows the relationship between the signal voltage of the nth scanning line (vertical axis) and the time (horizontal axis); and $S_m$ shows the relationship between the signal voltage of the mth signal line (vertical axis) and the time (horizontal axis). $P_{n,m}$ shows the relationship between the voltage to be applied to a normal pixel electrode connected to the nth scanning line and the mth signal line (vertical axis) and the time (horizontal axis). $P'_{n,m}$ shows the relationship between the voltage to be applied to a corrected pixel electrode connected to the nth scanning line and the mth signal line (vertical axis) and the time (horizontal axis).

As shown in $G_n$ and $G_{n+1}$, a selection signal voltage $V_{gh}$ for successively selecting a switching element is applied to the scanning line during a selection time $T_{on}$. A video signal voltage $V_0$ is applied to the signal line during the selection time $T_{on}$. As shown in $P_{n,m}$ in the case of a normal pixel electrode, the video signal voltage $V_0$ is retained during a non-selection time $T_{off}$. When a next selection signal voltage $V_{gh}$ is applied to the scanning line, a video signal voltage $-V_0$ is applied to the signal line.

On the other hand, as shown in $P'_{n,m}$ an image signal from the signal line is always supplied to a corrected pixel electrode, so that the corrected pixel electrode cannot function in a normal manner. However, the pixel operated by the corrected pixel electrode (hereinafter, referred to as "a corrected pixel") performs a display corresponding to the effective value of a video signal voltage applied to the signal line during one period. Thus, this pixel performs a display with average brightness of pixels arranged along the signal line without becoming a completely bright point or black point. This corrected pixel becomes a pixel defect which is hardly discriminated.

It is required that the electrical resistance of a portion which is connected by the irradiation of a laser beam is smaller than the electrical resistance of a switching element which is in a selected state (hereinafter, referred to as "ON resistance") at the corrected pixel electrode. The reason for this is as follows:

The value of the ON resistance of the switching element is set to allow a sufficient current to flow so that the pixel electrode is charged while the switching element is selected. Thus, when the resistance of a portion which is connected by the irradiation of a laser beam is larger than the ON resistance, a signal voltage, which varies at each time of selecting a switching element, is not sufficiently written in the corrected pixel electrode, and the effective value of a voltage to be applied to the corrected pixel electrode becomes small. In this state, the brightness of a pixel operated by the corrected pixel electrode is greatly different from that of the other normal pixels, so that the pixel operated by the corrected pixel electrode is visually recognized as a pixel defect.

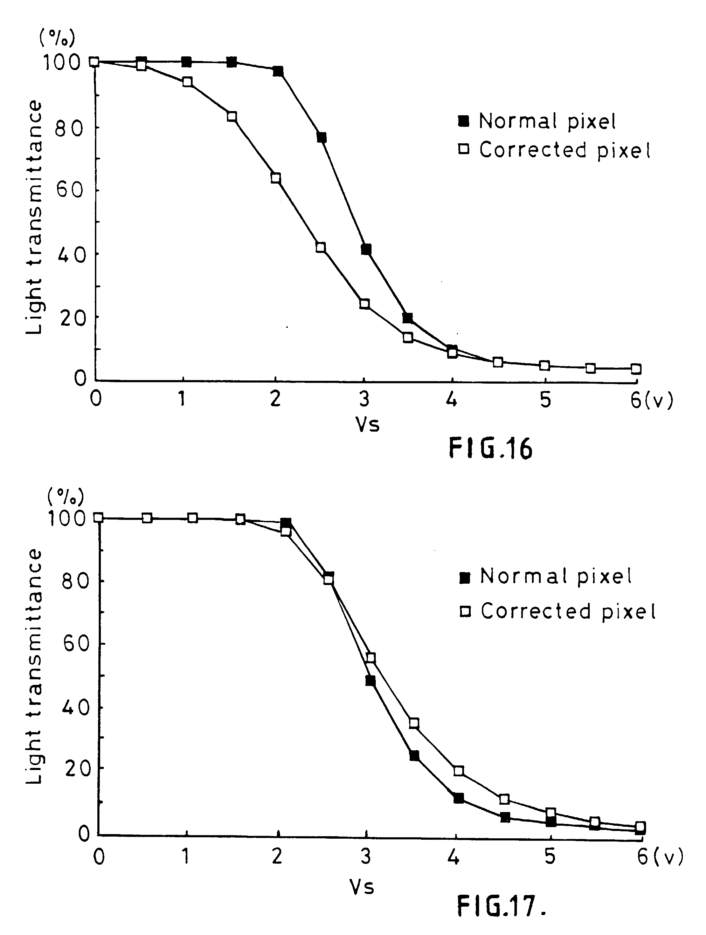

As described above, in the case where the electrical resistance of the corrected pixel electrode is smaller than the ON resistance of the normal pixel electrode, a voltage with a waveform of a signal on the source bus line is directly applied to the corrected pixel with low resistance. Thus, the effective value of a voltage to be applied to the corrected pixel becomes larger than that of a voltage to be applied to normal pixels which are influenced by the ON resistance of the TFT. As a result, as shown in Figure **16**, in the case of a normally white mode, the light transmittance of the corrected pixel becomes smaller than that of the normal pixel. More specifically, since the corrected pixel becomes dark, the bright point can be concealed.

According to the above-mentioned conventional method for correcting a pixel defect, a satisfactory correction can be made in an ideal TFT liquid crystal display device. However, in some cases, because of the properties of a TFT, lines, etc. and the variation of constants, the light transmittance of the corrected pixel does not become sufficiently lower than that of the normal pixel. For example, this phenomenon is caused in the following cases:

The resistance of a portion which is connected by the irradiation of a laser beam is larger than the ON resistance; and the resistance, in the case where a common transition is caused between the substrates so as to connect lines provided on the active matrix substrate to lines provided on the counter electrode, is increased to several k$\Omega$ (in general, this resistance is in the order of tens of $\Omega$).

In these cases, the effective value of a voltage to be applied to the corrected pixel electrode becomes small, so that the corrected pixel becomes brighter than the normal pixel as shown in Figure 17. Thus, the corrected pixel remains on a display surface as a bright point instead of a black point.

A first aspect of the present invention provides a driving circuit for driving an active matrix type display device, the display device comprising. a signal line for carrying a drive signal; a plurality of pixel electrodes for receiving a signal corresponding to the level of the drive signal from the signal line; a first connecting means provided between the signal line and a first one of the pixel electrodes, for electrically either connecting or not connecting the signal line and the first pixel electrode based on a scanning signal supplied from a scanning line; and a second connecting means provided between the signal line and a second one of the pixel electrodes, electrically connecting the signal line and the second pixel electrode regardless of the scanning signal,

wherein the driving circuit includes a source driving circuit for supplying the drive signal to the signal line, and a signal control means for controlling the source driving circuit;

characterised in that the signal control means generates a display correcting signal and generates the drive signal from a video signal and the display correcting signal based on a timing signal and controls the source driving circuit so that the source driving circuit supplies the drive signal to the signal line; and in that the amplitude of the display correcting signal is greater than the amplitude of the video signal.

In a preferred embodiment the display device is a normally-white display.

In another embodiment the signal control circuit generates, as the drive signal, the display correcting signal during the vertical blanking interval and the video signal during the time other than the vertical blanking interval, based on an indication signal indicating the vertical blanking interval of the video signal.

In another embodiment of the present invention, the signal control circuit includes:

a signal generating circuit for generating the display correcting signal and the indication signal; and
a signal selection circuit for switching the video signal and the display correcting signal, based on the indication signal.

In another embodiment of the present invention, the signal selection circuit is an analog switching element.

In another embodiment of the present invention, the signal selection circuit is incorporated in the source driving circuit.

In another embodiment of the present invention, the first connecting element is a thin film transistor element.

In another embodiment of the present invention, the second connecting element is an isolated thin film transistor element which is disconnected from the scanning line by the irradiation of a laser beam, and an electrode on the side of the signal line is electrically connected to an electrode on the side of the pixel electrode via the isolated thin film transistor element by the irradiation of a laser beam.

In another embodiment of the present invention, the video signal is an video signal of an NTSC, PAL or SECAM system.

In another embodiment of the present invention, the display correcting signal is a voltage signal with a rectangular waveform.

A second aspect of the present invention provides a method of driving an active matrix type display device, the device comprising:

a signal line for carrying a drive signal;
a scanning line for carrying a scanning signal;
a source driving circuit for supplying the drive signal to the signal line;
a plurality of pixel electrodes for receiving a signal corresponding to the level of the drive signal from the signal line;
a first connecting means provided between the signal line and a first one of the pixel electrodes, electrically either connecting or not connecting the signal line and the first pixel electrode based on the scanning signal supplied from the scanning line; and
a second connecting means provided between the signal line and a second one of the pixel electrodes, electrically connecting the signal line and the second pixel electrode regardless of the scanning signal.

characterised in that the method comprises the steps of: controlling the source driving circuit based on a timing signal; and generating the drive signal from a video signal and a display correcting signal and supplying the drive signal to the signal line;

in that the amplitude of the display correcting signal (B) is greater than the amplitude of the video signal; and in that the drive signal is generated by selecting either the display correcting signal or the video signal.

In a preferred embodiment the display device is a normally-white display.

In another embodiment of the present invention, the step of controlling the source driving circuit includes the steps of: indicating a vertical blanking interval of the video signal based on the timing signal; and supplying the display correcting signal to the signal line during the vertical blanking interval and supplying the video signal to the signal line during the time other than the vertical blanking interval.

In another embodiment of the present invention, the first connecting element is a thin film transistor element.

In another embodiment of the present invention, the second connecting element is an isolated thin film transistor element which is disconnected from the scanning line by the irradiation of a laser beam, and an electrode on the side of the signal line is electrically connected to an electrode on the side of the pixel electrode via the isolated thin film transistor element by the irradiation of a laser beam.

In another embodiment of the present invention, the video signal is a video signal of an NTSC, PAL or SECAM system.

In another embodiment of the present invention, the display correcting signal is a voltage signal with a rectangular waveform.

Thus, the invention described herein makes possible the advantage of providing a driving circuit for a display device, which can decrease the light transmittance of a corrected pixel and improve the quality of an image of a display device, even though the electrical resistance of a corrected pixel is large.

This and other advantages of the present invention will become apparent to those skilled in the art upon reading and understanding the following detailed description with reference to the accompanying figures.

Figure 1 is a block diagram showing a driving circuit for a display device of the present invention and a TFT liquid crystal display device.

Figure 2 is a partial plan view showing the structure of an active matrix substrate provided in the TFT liquid crystal display device of Figure 1.

Figure 3 is a plan view showing the state in which a thin film transistor provided on the active matrix substrate of Figure 2 is corrected.

Figure 4 is a schematic diagram showing the driving circuit for a display device and a display panel of the present invention.

Figure 5 is a waveform diagram of a video signal for driving a liquid crystal used in the present invention during a vertical blanking interval and before and after the interval.

Figure 6 is a display correcting signal with a large amplitude, which is inserted in the vertical blanking interval of the video signal of Figure 5.

Figure 7 is a vertical blanking interval indication signal which discriminates the vertical blanking interval to switch an analog switch.

Figure 8 is a video signal for driving liquid crystal to be supplied to a source driver, obtained by modifying the vertical blanking interval of the video signal of Figure 5.

Figure 9 is a graph showing an example of the relationship between the effective value of a voltage to be applied to liquid crystal and the light transmittance of the liquid crystal.

Figure 10 is a diagram showing the relationship between the signal to be applied to a scanning line and a signal line and the voltage of a pixel electrode.

Figure 11 is a block diagram showing a conventional driving circuit for a display device and a TFT liquid crystal display device.

Figure 12 is a partial plan view showing the general structure of an active matrix substrate provided in the TFT liquid crystal display device of Figure 11.

Figure 13 is a waveform diagram of a video signal of an NTSC system during a vertical blanking interval and before and after the interval.

Figure 14 is a waveform of a video signal for driving liquid crystal.

Figure 15 is a plan view showing the state in which a thin film transistor related to a pixel defect is corrected.

Figure 16 is a voltage - light transmittance curve of a normal pixel and a corrected pixel in an ideal TFT liquid crystal driving device.

Figure 17 is a voltage - light transmittance curve in which resistance of a common transition is increased more than usual.

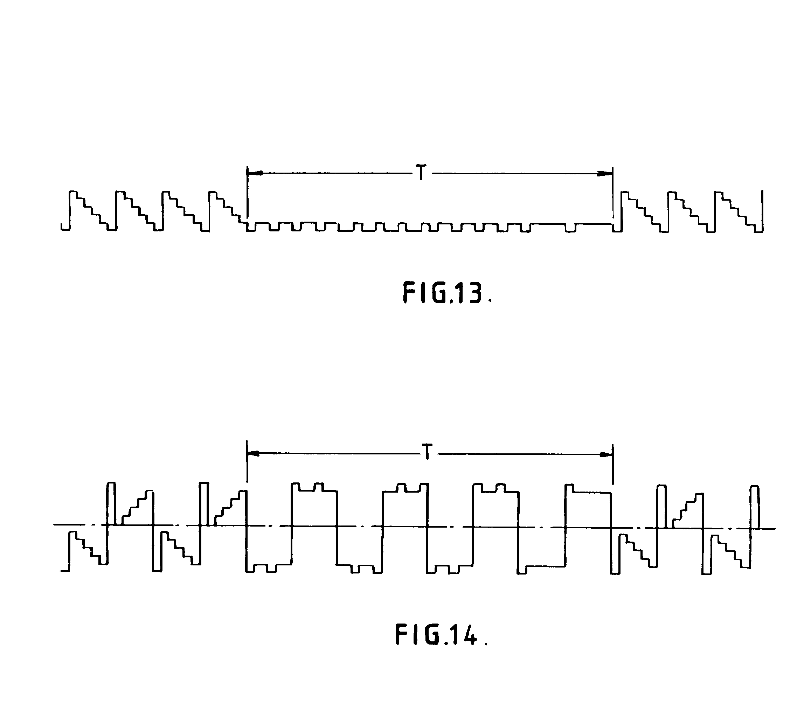

As an example of a video signal to be applied to a pixel electrode, there is a known video signal of an NTSC system shown in Figure 13 and a conventional video signal for driving TFT liquid crystal shown in Figure 14. Signals during vertical blanking intervals T of the video signals shown in Figures 13 and 14 generally have the same voltage level as that of a video signal at a black level. In general, since the signal during the vertical blanking interval T is not used for displaying an image, the voltage level of this signal is not prescribed.

According to the present invention, a source driving circuit is controlled based on a timing signal, and either the video signal or a display correcting signal is supplied from the source driving circuit to a signal line. The display correcting signal is set so as to have a voltage amplitude larger than that of the video signal, so that the effective value of a voltage to be applied to a pixel electrode can be made large. In the case where the display device is driven in a normally white mode, when the effective value of a voltage to be applied to the pixel electrode increases, the light transmittance of the pixel decreases.

The timing signal can be a signal showing the vertical blanking interval. A video signal is generally supplied from the source driving circuit to the signal line. However, according to the present invention, the vertical blanking interval is indicated by the timing signal, and the source driving circuit is controlled in accordance with the vertical blanking interval, whereby the display correcting signal is supplied to the signal line instead of the video signal during the vertical blanking interval. During the time other than the vertical blanking interval, the video signal is supplied to the signal line.

The above-mentioned operation is performed by signal control means, e.g., a signal control circuit. Based on the timing signal, a synthetic signal of the video signal and the display correcting signal is generated by the signal control circuit, and the synthetic signal is supplied to the signal line by the source driving circuit.

In the case where a signal generating circuit is provided in the signal control circuit, the timing signal and the display correcting signal can be generated by the signal generating circuit. Moreover, in the case where a signal selection circuit is provided, the video signal or the display correcting signal is selected based on the timing signal to generate the above-mentioned synthetic signal.

As a first connecting element, a switching element, e.g., a thin film transistor (TFT) or an MOS transistor element can be used. In the same way as in a driving method of a general active matrix type display device, the scanning line is not selected during the vertical blanking interval. Thus, the pixel electrode is not influenced by the display correcting signal since the switching element is in an OFF state.

A second connecting element always makes the signal line and the pixel electrode in an electrically conductive state. More specifically, the second connecting element can be a switching element which is disconnected from the scanning line and directly connects the pixel electrode to the signal line. Hereinafter, a switching element thus processed is referred to as an isolated switching element. The isolated switching element is always in an ON state, so that the pixel electrode connected to the isolated switching element is always applied with a signal which is supplied to the signal line, regardless of the scanning signal. Thus, during the vertical blanking interval, a voltage corresponding to the display correcting signal is applied to the pixel electrode connected to the isolated switching element, and during the time other than the vertical blanking interval, a voltage corresponding to the video signal is applied thereto.

Furthermore, since a signal with a voltage waveform having an amplitude as large as possible is used as the display correcting signal, when the display correcting signal is supplied to the pixel electrode, the effective value of a voltage to be applied to the pixel electrode increases. In the case where the display device is driven in a normally white mode, the light transmittance of a corresponding pixel decreases.

Examples

Hereinafter, the present invention will be described by way of illustrating examples with reference to the drawings.

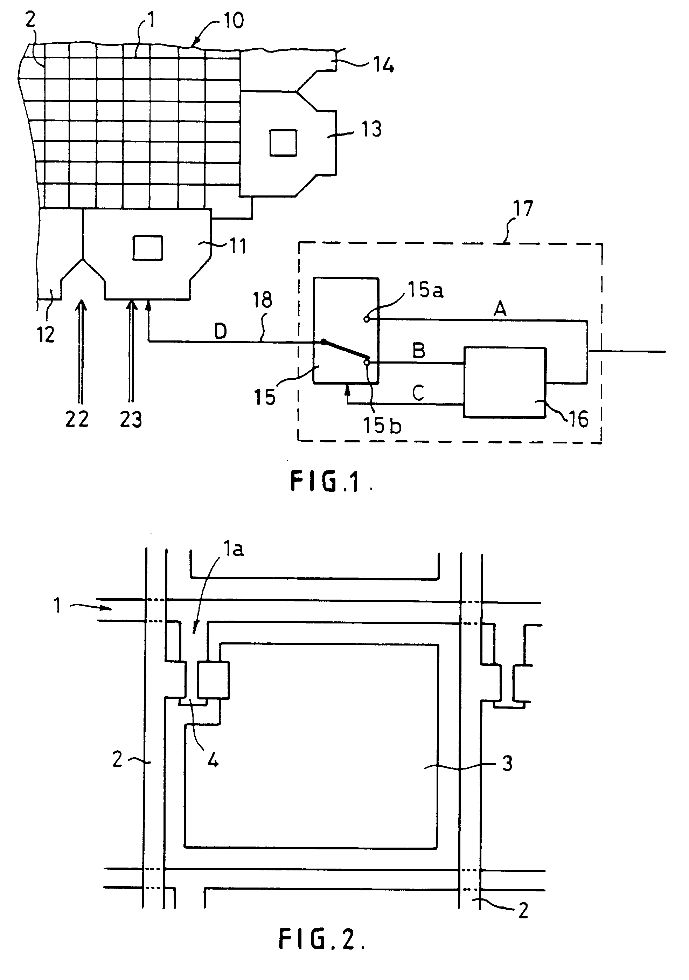

Figure **1** is a block diagram showing a driving circuit for a display device of the present invention and a liquid crystal display device provided with the driving circuit. In this liquid crystal display device, a thin film transistor (TFT) is used as a switching element. A liquid crystal display device **10** has an active matrix substrate which is similar to that of a conventional one. When a pixel defect is caused, a TFT element connected to a defective pixel is disconnected from a scanning line and a correction is made in the TFT element so that an electrode on the side of a signal line (a source electrode) is connected to an electrode on the side of a pixel electrode (a drain electrode). The pixel electrode which is connected to such a TFT element mentioned above is referred to as a corrected pixel electrode and a pixel corresponding to the corrected pixel electrode is referred to as a corrected pixel. The liquid crystal display device **10** includes such a corrected pixel. Figure **2** shows a plan view of an exemplary active matrix substrate. On a glass substrate, gate bus lines **1** (scanning lines) provided in substantially parallel with each other and source bus lines **2** (signal lines) are provided so that each gate bus line **1** crosses each source bus line **2**. A pixel electrode **3** is formed in the rectangular region formed by each gate bus line **1** and each source bus line **2**. As a switching element, a TFT **4** is connected to each pixel electrode **3**. The TFT **4** is provided on a gate electrode 1a branched from the gate bus line **1**.

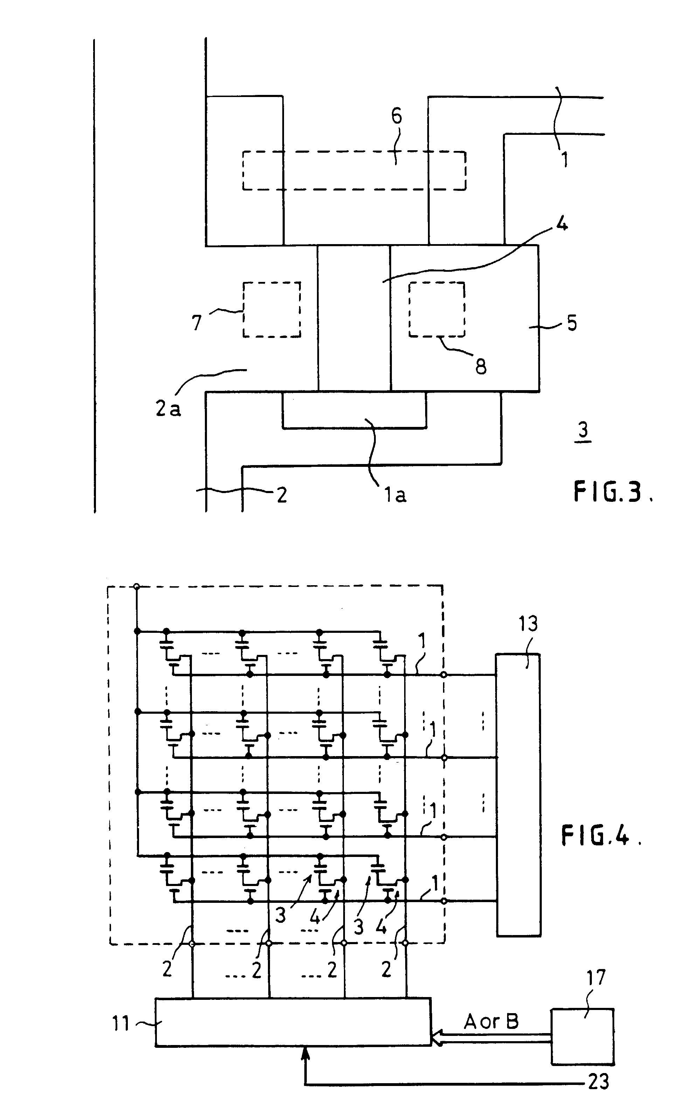

As shown in Figure **3**, a correction is made in the TFT **4** connected to a defective pixel. A method for the correction is the same as that of the conventional technique as follows:

A laser beam is irradiated to a laser beam irradiation portion **6** of the gate electrode 1a to disconnect the gate electrode 1a and the TFT **4** from the gate bus line **1**. Then, a laser beam is irradiated to a laser beam irradiation portion **8** to electrically connect a drain electrode **5** (which is connected to the pixel electrode **3**) to the gate electrode **1a**. A laser beam is irradiated to a laser beam irradiation portion **7** to connect a source electrode **2a** (which is branched from the source bus line **2**) to the gate electrode **1a**. Thus, a correction is made so that the source electrode **2a** branched from the source bus line **2** is electrically connected to the pixel electrode **3** via the gate electrode **1a** thus isolated from the gate bus line **1**.

In the TFT liquid crystal display device with the above-mentioned structure, liquid crystal molecules are oriented so that a display is performed in a normally white mode.

As shown in Figure **1**, the TFT liquid crystal display device is provided with gate driving circuits **13** and **14** connected to the ends of the gate bus lines **1**, source driving circuits **11** and **12** connected to the lower ends of the source bus lines **2**, and source driving circuits (not shown) connected to the upper ends of the source bus lines **2**.

A voltage is applied from a gate drive power source to the gate driving circuits **13** and **14** and a gate driver control signal is supplied thereto in the same way as in the conventional example. The gate driving circuits **13** and **14** output a gate signal to the gate bus lines **1** based on the gate driver control signal.

The same input signal is input into the above-mentioned four driving circuits and the same output signal is output therefrom. The input and output of a signal will be described by way of illustrating an example of the source driving circuit **11**.

A voltage **22** from the source driver power source and a source driver control signal **23** are directly applied to each line (not shown) in the source driving circuit **11**. One end of a line **18** is connected to the source driving circuit **11,** and a signal control circuit **17** is provided at the other end of the line **18**. The signal control circuit **17** includes a signal selection circuit **15** and a signal generation circuit **16**. Here, as an example, the signal selection circuit **15** has an analog switch provided with two terminals **15a** and **15b**. A video signal **A** for driving the liquid crystal display is supplied to the terminal **15a** and a display correcting signal **B** with an amplitude larger than that of the video signal **A** is supplied to the terminal **15b**. Moreover, a vertical blanking interval indication signal **C** for indicating a vertical blanking interval is supplied to the signal selection circuit **15**. The signal selection circuit **15** allows the analog switch thereof to select the video signal **A** or the display correcting signal **B** based on the indication signal **C**. In Figure **1**, the signal selection circuit **15** is provided outside the source driving circuit **11**. It is also possible that the signal selection circuit **15** is incorporated in the source driving circuit **11**. According to the present invention, the source driving circuit **11** is provided with the signal selection circuit **15**.

The other source driving circuits also have the above-mentioned structure.

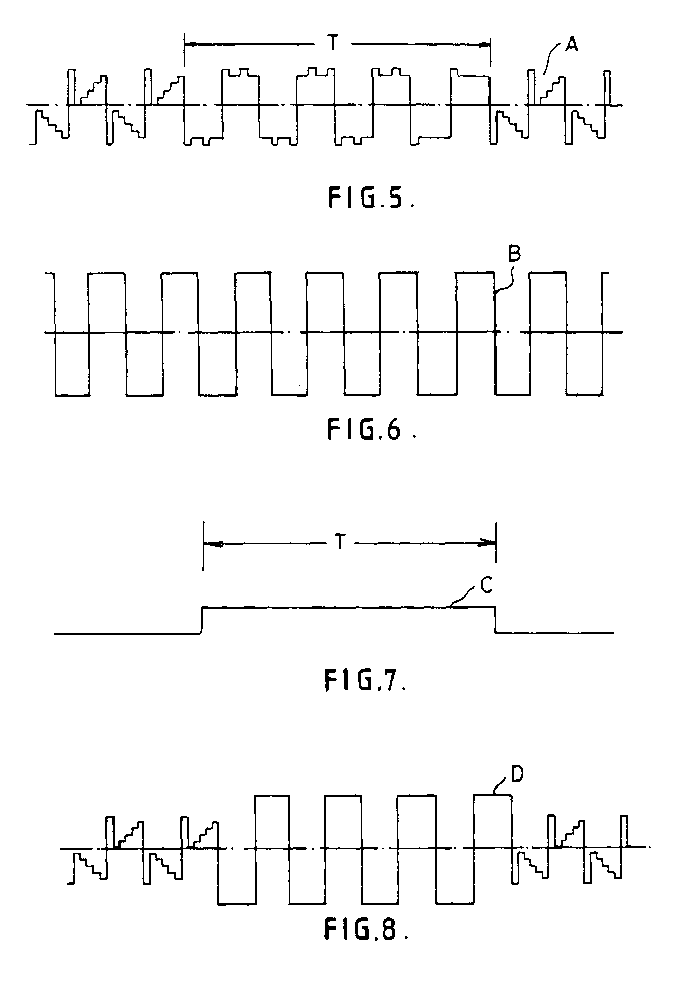

In the present example, a signal for driving TFT liquid crystal as shown in Figure **5** is used as the video signal **A**. In the case where a video signal of an NTSC system (in general, this video signal is domestically used in Japan) is used for driving liquid crystal, it is required to invert the polarity of the video signal so as to perform an a.c. drive of liquid crystal. As usually performed in a liquid crystal drive method, such an inversion operation can be performed by using a polarity inverting signal output from a module. As the display correcting signal **B**, as shown in Figure **6**, a signal in a voltage waveform with a large amplitude is used. As the vertical blanking interval indication signal **C**, as shown in Figure **7**, a signal at a high level (i.e., in an ON state) during a vertical blanking interval **T** is used.

The signal selection circuit **15** makes the terminal **15a** of the analog switch conductive while the level of the vertical blanking interval indication signal **C** is at a low level (i.e., in an OFF state) and makes the terminal **15b** conductive while the vertical blanking interval indication signal **C** is at a high level (i.e., in an ON state). Because of this, as shown in Figure **8**, a signal to be supplied to the pixel electrode **3** is a video signal **D** obtained by synthesizing the video signal **A** with the display correcting signal **B**. Namely, in the video signal **D**, the portion of the video signal **A** corresponding to the vertical blanking interval **T** has been exchanged to have a waveform of the display correcting signal **B**.

The gate driving circuit and the source driving circuit will be described with reference to Figure **4**. Each gate driving circuit and each source driving circuit operates in the same way, respectively, so that the operations of the gate driving circuit **13** and the source driving circuit **11** will be described.

A scanning signal with a pulse width of one horizontal scanning interval is successively applied to the gate bus line **1** by the gate driving circuit **13**. During a horizontal scanning interval, the video signal **A** is supplied to the source driving circuit **11** from the signal control circuit **17**. While one gate bus line **1** is selected by the scanning signal, the source driving circuit **11** outputs a video signal to each source bus line **2** before the completion of one horizontal scanning interval. Because of this, the video signal is written in each pixel connected to the selected gate bus line **1**. The source driving circuit **11** also performs a signal output operation during the vertical blanking interval **T** and outputs the display correcting signal **B**, which is supplied from the signal control circuit **17,** to the source bus line **2**. On the other hand, the gate driving circuit **13** outputs a scanning signal, successively selecting each gate bus line **1** during one vertical interval, however, it does not output a scanning signal during the vertical blanking interval **T.** Thus, during the vertical blanking interval **T**, the display correcting signal **B** is written only in corrected pixels in an ON state, regardless of scanning signals.

A signal voltage is applied to each pixel electrode **3** by the above-mentioned operation. A signal output from the source driving circuit **11** is directly supplied to the pixel electrode **3** of a corrected pixel without passing though the TFT **4**. Thus, a voltage which is applied to the corrected pixel electrode has the effective value of an output signal voltage supplied from the source driving circuit **11** during one vertical scanning interval.

For example, the amplitude of an output signal from the source driving circuit **11**, i.e., the display correcting signal **B** during the vertical blanking interval **T** is 18 V. A usual video signal during the vertical blanking interval **T** is at a black level and has an amplitude of about 12 V. In the case of a video signal of an NTSC system, the vertical blanking interval **T** occupies a time equal to 20 horizontal scans in one vertical scan (= 262.5 horizontal scans). Thus, the effective value of a voltage to be applied to liquid crystal of a corrected pixel increases by the value shown by the following Expression (1):

$$\sqrt{\frac{242.5X^2 + 20 \times (18/2)^2}{262.5}} - \sqrt{\frac{242.5X^2 + 20 \times (12/2)^2}{262.5}} \tag{1}$$

(X: amplitude of a video signal/2)

As an example, the effective value of a voltage to be applied to a corrected pixel in the case where the amplitude of the video signal **A** is 6 V is calculated based on the above-mentioned Expression (1). The effective value of a video signal (which is not synthesized) is 3.3 V, and that of the video signal **D** (which is synthesized) is 3.8 V. Thus, the effective value of the voltage of the synthesized signal greatly increases, compared with that of the voltage of the signal which is not synthesized.

Figure **9** shows the relationship between the voltage to be applied and the light transmittance of liquid crystal in the TFT liquid crystal driving device in a normally white mode. As shown in Figure **9**, if the synthesized signal with a display correcting signal is supplied, the light transmittance of liquid crystal decreases by about 25% compared with the case where a signal which is not synthesized is supplied. Thus, a corrected pixel becomes darker than the conventional corrected pixel and becomes inconspicuous.

In the present example, the signal selection circuit **15** selects the video signal **A** or the display correcting signal **B**, based on the indication signal **C** indicating the vertical blanking interval **T** of the video signal **A**. Because of this, the display correcting signal **B** is supplied to the pixel electrode **3** instead of the video signal **A** during the vertical blanking interval **T**.

Moreover, since the display correcting signal **B** has a voltage waveform with an amplitude as large as possible, a voltage to be applied to a corrected pixel increases. Even though the display correcting signal **B** is supplied to a normal pixel, the normal pixel is not influenced by the display correcting signal **B** during the vertical blanking interval **T**. On the other hand, when the display correcting signal **B** is supplied to a corrected pixel, since the liquid crystal display device is driven in a normally white mode, a defective pixel becomes darker than a normal pixel due to its decreased light transmittance.

In the present example, the signal selection circuit **15** switches the analog switch to select the video signal **A** or the display correcting signal **B**. According to the present invention, the analog switch can be switched by other kinds of switching circuits. The signal selection circuit **15** can be constituted by a multiplexer or the like.

In addition, in the present example, a signal which is previously formed is used as the vertical blanking interval indication signal **C**. It is also possible to directly form a signal from the video signal **A**. For example, a video signal is generally processed by a video signal processing circuit to generate a timing signal indicating the vertical blanking interval.

Moreover, in the present example, a video signal of an NTSC system is used. The present invention is not limited thereto and other video signals can be used in the same way , for example PAL and SECAM systems.

As described above, according to the present invention, a display correcting signal having a large amplitude during the vertical blanking interval is supplied to a corrected pixel. Thus, it is possible to decrease the light transmittance of the corrected pixel by increasing the effective value of a voltage to be applied to the corrected pixel. Because of this, the corrected pixel is made dark to be undiscriminable, making it possible to prevent the decrease in a display quality of a screen. Moreover, only the corrected pixels are influenced to be made dark without any influence on normal pixels, since the gate driving circuit does not output a scanning signal during the vertical blanking interval. Furthermore, this signal operation is performed by a driving circuit, so that the corrected pixel can be made dark without any influence on a video signal processing system.

## Claims

1.  A driving circuit for driving an active matrix type display device, the display device comprising:

    a signal line (2) for carrying a drive signal (D);
    a plurality of pixel electrodes (3) for receiving a signal corresponding to the level of the drive signal from the signal line;
    a first connecting means provided between the signal line and a first one of the pixel electrodes, for electrically either connecting or not connecting the signal line and the first pixel electrode based on a scanning signal supplied from a scanning line (1); and
    a second connecting means provided between the signal line and a second one of the pixel electrodes, electrically connecting the signal line and the second pixel electrode regardless of the scanning signal,
    wherein the driving circuit includes a source driving circuit (11) for supplying the drive signal (D) to the signal line, and a signal control means (17) for controlling the source driving circuit;

    characterised in that the signal control means generates a display correcting signal (B) and generates the drive signal (D) from a video signal (A) and the display correcting signal (B) based on a timing signal and controls the source driving circuit so that the source driving circuit supplies the drive signal (D) to the signal line; and in that the amplitude of the display correcting signal (B) is greater than the amplitude of the video signal (A).

2.  A driving circuit for driving an active matrix type display device as claimed in claim 1, wherein the display device is a normally-white display.

3.  A driving circuit for driving an active matrix type display device according to claim 1,
    wherein the signal control means generates, as the drive signal, the display correcting signal during the vertical blanking interval and the video signal during the time other than the vertical blanking interval, based on an indication signal indicating the vertical blanking interval of the video signal.

4. A driving circuit for driving an active matrix type display device according to claim 1,
    wherein the signal control means comprises:

    a signal generating circuit for generating the display correcting signal and the indication signal; and
    a signal selection circuit for switching the video signal and the display correcting signal, based on the indication signal.

5. A driving circuit for driving an active matrix type display device according to claim 4, wherein the signal selection circuit is an analog switching element.

6. A driving circuit for driving an active matrix type display device according to claim 4, wherein the signal selection circuit is incorporated in the source driving circuit.

7. A driving circuit for driving an active matrix type display device according to claim 1, wherein the first connecting means is a thin film transistor element.

8. A driving circuit for driving an active matrix type display device according to claim 7,
    wherein the second connecting means is an isolated thin film transistor element which is disconnected from the scanning line by the irradiation of a laser beam, and an electrode on the side of the signal line is electrically connected to an electrode on the side of the pixel electrode via the isolated thin film transistor element by the irradiation of a laser beam.

9. A driving circuit for driving an active matrix type display device according to claim 1, wherein the video signal is a video signal of an NTSC, PAL or SECAM system.

10. A driving circuit for driving an active matrix type display device according to claim 1, wherein the display correcting signal is a voltage signal with a rectangular waveform.

11. A method of driving an active matrix type display device, the device comprising:

    a signal line (2) for carrying a drive signal (D);
    a scanning line (1) for carrying a scanning signal;
    a source driving circuit (11) for supplying the drive signal to the signal line;

    a plurality of pixel electrodes (3) for receiving a signal corresponding to the level of the drive signal from the signal line;
    a first connecting means provided between the signal line and a first one of the pixel electrodes, electrically either connecting or not connecting the signal line and the first pixel electrode based on the scanning signal supplied from the scanning line; and
    a second connecting means provided between the signal line and a second one of the pixel electrodes, electrically connecting the signal line and the second pixel electrode regardless of the scanning signal,

    characterised in that the method comprises the steps of: controlling the source driving circuit (11) based on a timing signal; and generating the drive signal (D) from a video signal (A) and a display correcting signal (B) and supplying the drive signal (D) to the signal line (2);

    in that the amplitude of the display correcting signal (B) is greater than the amplitude of the video signal (A);
    and in that the drive signal (D) is generated by selecting either the display correcting signal (B) or the video signal (A).

12. A method of driving an active matrix type display device as claimed in claim 11, wherein the display device is a normally-white display.

13. A method for driving an active matrix type display device according to claim 11, wherein the step of controlling the source driving circuit comprises the steps of: indicating a vertical blanking interval of the video signal based on the timing signal; and supplying the display correcting signal to the signal line during the vertical blanking interval and supplying the video signal to the signal line during the time other than the vertical blanking interval.

14. A method for driving an active matrix type display device according to claim 11, wherein the first connecting means is a thin film transistor element.

15. A method for driving an active matrix type display device according to claim 14, wherein the second connecting means is an isolated thin film transistor element which is disconnected from the scanning line by the irradiation of a laser beam, and an electrode on the side of the signal line is electrically connected to an electrode on the side of the pixel electrode via the isolated thin film transistor element by the irradiation of a laser beam.

16. A method for driving an active matrix type display device according to claim 11, wherein the video signal is a video signal of an NTSC, PAL or SECAM system.

17. A method for driving an active matrix type display device according to claim 11, wherein the display correcting signal is a voltage signal with a rectangular waveform.

**Patentansprüche**

1. Treiberschaltung zum Ansteuern einer Aktivmatrixtyp-Anzeigevorrichtung. wobei die Anzeigevorrichtung umfaßt:

eine Signalleitung (2) zum Führen eines Ansteuersignales (D);

eine Vielzahl von Pixelelektroden (3) zum Empfangen eines Signales entsprechend dem Pegel des Ansteuersignales von der Signalleitung;

eine erste Verbindungseinrichtung, die zwischen der Signalleitung und einer ersten Elektrode der Pixelelektroden vorgesehen ist, um elektrisch die Signalleitung und die erste Pixelelektrode aufgrund eines von einer Abtastleitung (1) eingespeisten Abtastsignales entweder zu verbinden oder nicht zu verbinden; und

eine zweite Verbindungseinrichtung, die zwischen der Signalleitung und einer zweiten Elektrode der Pixelelektroden vorgesehen ist, wobei sie elektrisch die Signalleitung und die zweite Pixelelektrode unabhängig von dem Abtastsignal verbindet,

wobei die Treiberschaltung eine Quellentreiberschaltung (11) zum Einspeisen des Ansteuersignales (D) zu der Signalleitung und eine Signalsteuereinrichtung (17) zum Steuern der Quellentreiberschaltung aufweist;

**dadurch gekennzeichnet**, daß
die Signalsteuereinrichtung ein Anzeigekorrektursignal (B) erzeugt und das Ansteuersignal (D) aus einem Videosignal (A) und dem Anzeigekorrektursignal (B) aufgrund eines Zeitsteuersignals liefert und die Quellentreiberschaltung derart steuert, daß die Quellentreiberschaltung das Ansteuersignal (D) zu der Signalleitung speist, und daß die Amplitude des Anzeigekorrektursignales (B) größer als die Amplitude des Videosignales (A) ist.

2. Schaltung zum Ansteuern einer Aktivmatrixtyp-Anzeigevorrichtung nach Anspruch 1, bei der die Anzeigevorrichtung eine normal-weiße Anzeige ist.

3. Treiberschaltung zum Ansteuern einer Aktivmatrixtyp-Anzeigevorrichtung nach Anspruch 1, bei der die Signalsteuereinrichtung als das Ansteuersignal das Anzeigekorrektursignal während des Vertikalaustastintervalles und das Videosignal während der übrigen, von dem Vertikalaustastintervall verschiedenen Zeit aufgrund eines Anzeigesignales, das das Vertikalaustastintervall des Videosignales anzeigt, erzeugt.

4. Treiberschaltung zum Ansteuern einer Aktivmatrixtyp-Anzeigevorrichtung nach Anspruch 1, bei der die Signalsteuereinrichtung aufweist:

eine Signalerzeugungsschaltung zum Erzeugen des Anzeigekorrektursignales und des Anzeigesignales und

eine Signalauswahlschaltung zum Schalten des Videosignales und des Anzeigekorrektursignales aufgrund des Anzeigesignales.

5. Treiberschaltung zum Ansteuern einer Aktivmatrixtyp-Anzeigevorrichtung nach Anspruch 4, bei der die Signalauswahlschaltung ein analoges Schaltelement ist.

6. Treiberschaltung zum Ansteuern einer Aktivmatrixtyp-Anzeigevorrichtung nach Anspruch 4, bei der die Signalauswahlschaltung in der Quellenansteuerschaltung enthalten ist.

7. Treiberschaltung zum Ansteuern einer Aktivmatrixtyp-Anzeigevorrichtung nach Anspruch 1, bei der die erste Verbindungseinrichtung einer Dünnfilmtransistorelement ist.

8. Treiberschaltung zum Ansteuern einer Aktivmatrixtyp-Anzeigevorrichtung nach Anspruch 7, bei der die zweite Verbindungseinrichtung ein isoliertes Dünnfilmtransistorelement ist, das von der Abtastleitung durch die Bestrahlung eines Laserstrahles getrennt ist, und bei der eine Elektrode auf der Seite der Signalleitung elektrisch mit einer Elektrode auf der Seite der Pixelelektrode über das isolierte Dünnfilmtransistorelement durch die Bestrahlung eines Laserstrahles verbunden ist.

9. Treiberschaltung zum Ansteuern einer Aktivmatrixtyp-Anzeigevorrichtung nach Anspruch 1, bei der das Videosignal ein Videosignal eines NTSC-, PAL-oder SECAM-Systems ist.

10. Treiberschaltung zum Ansteuern einer Aktivmatrixtyp-Anzeigevorrichtung nach Anspruch 1, bei der das Anzeigekorrektursignal ein Spannungssignal mit einer rechteckförmigen Wellenform ist.

11. Verfahren zum Ansteuern einer Aktivmatrixtyp-Anzeigevorrichtung, wobei die Vorrichtung aufweist:

eine Signalleitung (2) zum Führen eines Ansteuersignales (D);

eine Abtastleitung (1) zum Führen eines Abtastsignales;

eine Quellenansteuerschaltung (11) zum Einspeisen des Ansteuersignales in die Signalleitung;

eine Vielzahl von Pixelelektroden (3) zum Empfangen eines Signales entsprechend dem Pegel des Ansteuersignales von der Signalleitung;

eine erste Verbindungseinrichtung, die zwischen der Signalleitung und einer ersten Elektrode der Pixelelektroden vorgesehen ist, um elektrisch die Signalleitung und die erste Pixelelektrode aufgrund des von der Abtastleitung eingespeisten Abtastsignales entweder zu verbinden oder nicht zu verbinden; und

eine zweite Verbindungseinrichtung, die zwischen der Signalleitung und einer zweiten Elektrode der Pixelelektrode vorgesehen ist, wobei sie elektrisch die Signalleitung und die zweite Pixelelektrode unabhängig von dem Abtastsignal verbindet,

**dadurch gekennzeichnet**, daß

das Verfahren die folgenden Schritte aufweist:

Steuern der Quellenansteuerschaltung (11) aufgrund eines Zeitsteuersignales; und

Erzeugen des Ansteuersignales (D) aus einem Videosignal (A) und einem Anzeigekorrektursignal (B) und Einspeisen des Ansteuersignales (D) zu der Signalleitung (2);

daß die Amplitude des Anzeigekorrektursignales (B) größer als die Amplitude des Videosignales (A) ist;

und daß das Ansteuersignal (D) erzeugt wird durch Wählen von entweder dem Anzeigekorrektursignal (B) oder dem Videosignal (A).

12. Verfahren zum Ansteuern einer Aktivmatrixtyp-Anzeigevorrichtung nach Anspruch 11, bei dem die Anzeigevorrichtung eine normal-weiße Anzeige ist.

13. Verfahren zum Ansteuern einer Aktivmatrixtyp-Anzeigevorrichtung nach Anspruch 11, bei der der Schritt des Steuerns der Quellenansteuerschaltung die folgenden Schritte aufweist:

Angeben eines Vertikalaustastintervalles des Videosignales aufgrund des Zeitsteuersignales; und

Einspeisen des Anzeigekorrektursignales zu der Signalleitung während des Vertikalaustastintervalles und Einspeisen des Videosignales zu der Signalleitung während der Zeit, die von dem Vertikalaustastintervall verschieden ist.

14. Verfahren zum Ansteuern einer Aktivmatrixtyp-Anzeigevorrichtung nach Anspruch 11, bei dem die erste Verbindungseinrichtung ein Dünnfilmtransistorelement ist.

15. Verfahren zum Ansteuern einer Aktivmatrixtyp-Anzeigevorrichtung nach Anspruch 14, bei dem die zweite Verbindungseinrichtung ein isoliertes Dünnfilmtransistorelement ist, das von der Abtastleitung durch die Bestrahlung eines Laserstrahles getrennt ist, und bei dem eine Elektrode auf der Seite der Signalleitung elektrisch mit einer Elektrode auf der Seite der Pixelelektrode über das isolierte Dünnfilmtransistorelement durch die Bestrahlung eines Laserstrahles verbunden ist.

16. Verfahren zum Ansteuern einer Aktivmatrixtyp-Anzeigevorrichtung nach Anspruch 11, bei der das Videosignal ein Videosignal eines NTSC-, PAL-oder SECAM-Systems ist.

17. Verfahren zum Ansteuern einer Aktivmatrixtyp-Anzeigevorrichtung nach Anspruch 11, bei der das Anzeigekorrektursignal ein Spannungssignal mit einer rechteckförmigen Wellenform ist.

**Revendications**

1. Circuit d'attaque de dispositif d'affichage de type à matrice active, le dispositif d'affichage comportant:

une ligne de signal (2) pour transporter un signal d'attaque (D);
une pluralité d'électrodes de pixel (3) pour recevoir un signal correspondant au niveau du signal d'attaque provenant de la ligne de signal;
un premier moyen de connexion, entre la ligne de signal et une première électrode de pixel, pour connecter ou ne pas connecter électriquement la ligne de signal à la première électrode de pixel en fonction du signal de balayage fourni par une ligne de balayage (1); et

un deuxième moyen de connexion, entre la ligne de signal et une deuxième électrode de pixel, qui connecte électriquement la ligne de signal à la deuxième électrode de pixel, quel que soit le signal de balayage,

dans lequel le circuit d'attaque comprend un circuit d'attaque de source (11) pour fournir le signal d'attaque (D) à la ligne de signal et un moyen de commande de signal (17) pour commander le circuit d'attaque de source;

caractérisé en ce que le moyen de commande de signal génère un signal de correction d'affichage (B) et génère le signal d'attaque (D) à partir d'un signal vidéo (A) et le signal de correction d'affichage (B) en fonction d'un signal de synchronisation et commande le circuit d'attaque de source de façon à ce que celui-ci fournisse le signal d'attaque (D) à la ligne de signal; et en ce que l'amplitude du signal de correction d'affichage (B) est supérieure à l'amplitude du signal vidéo (A).

2. Circuit d'attaque de dispositif d'affichage de type à matrice active selon la revendication 1, dans lequel le dispositif est à affichage normalement blanc.

3. Circuit d'attaque de dispositif d'affichage de type à matrice active selon la revendication 1, dans lequel le moyen de commande de signal génère, en tant que signal d'attaque, le signal de correction d'affichage pendant l'intervalle de suppression de trame et le signal vidéo pendant la période autre que l'intervalle de suppression de trame, en fonction d'un signal indicateur qui indique l'intervalle de suppression de trame du signal vidéo.

4. Circuit d'attaque de dispositif d'affichage de type à matrice active selon la revendication 1,

dans lequel le moyen de commande de signal comporte:
un circuit de génération de signal pour générer le signal de correction d'affichage et le signal indicateur; et
un circuit de sélection de signal pour passer du signal vidéo au signal de correction d'affichage en fonction du signal indicateur.

5. Circuit d'attaque de dispositif d'affichage de type à matrice active selon la revendication 4, dans lequel le circuit de sélection de signal est un élément de commutation analogique.

6. Circuit d'attaque de dispositif d'affichage de type à matrice active selon la revendication 4, dans lequel le circuit de sélection de signal est incorporé au circuit d'attaque de source.

7. Circuit d'attaque de dispositif d'affichage de type à matrice active selon la revendication 1, dans lequel le premier moyen de connexion est un élément à transistor à couches minces.

8. Circuit d'attaque de dispositif d'affichage de type à matrice active selon la revendication 7,

dans lequel le deuxième moyen de connexion est un élément à transistor à couches minces isolé qui est déconnecté de la ligne de balayage par l'irradiation d'un faisceau laser et dans lequel une électrode du côté de la ligne de signal est connectée électriquement à une électrode du côté de l'électrode de pixel, à travers l'élément à transistor à couches minces isolé, par l'irradiation d'un faisceau laser.

9. Circuit d'attaque de dispositif d'affichage de type à matrice active selon la revendication 1, dans lequel le signal vidéo correspond à un système NTSC, PAL ou SECAM.

10. Circuit d'attaque de dispositif d'affichage de type à matrice active selon la revendication 1, dans lequel le signal de correction d'affichage est un signal de tension de forme d'onde rectangulaire.

11. Procédé d'attaque d'un dispositif d'affichage de type à matrice active, le dispositif comportant:

une ligne de signal (2) pour transporter un signal d'attaque (D);
une ligne de balayage (1) pour transporter un signal de balayage;
un circuit d'attaque de source (11) pour fournir le signal d'attaque à la ligne de signal;
une pluralité d'électrodes de pixel (3) pour recevoir un signal correspondant au niveau du signal d'attaque provenant de la ligne de signal;
un premier moyen de connexion, entre la ligne de signal et une première électrode de pixel, pour connecter ou ne pas connecter électriquement la ligne de signal à la première électrode de pixel en fonction du signal de balayage fourni par une ligne de balayage (1); et
un deuxième moyen de connexion, entre la ligne de signal et une deuxième électrode de pixel, qui connecte électriquement la ligne de signal à la deuxième électrode de pixel, quel que soit le signal de balayage,

caractérisé en ce que le procédé comporte les étapes: de commande du circuit d'attaque de source (11) en fonction d'un signal de synchronisation ; et de génération du signal d'attaque (D) à partir d'un signal vidéo (A) et d'un signal de correction d'affichage (B) et de fourniture du signal d'attaque (D) à la ligne de signal (2);

en ce que l'amplitude du signal de correction d'affichage (B) est supérieure à l'amplitude du signal vidéo (A); et

en ce que le signal d'attaque (D) est généré en sélectionnant soit le signal de correction d'affichage (B) soit le signal vidéo (A).

12. Procédé d'attaque d'un dispositif d'affichage de type à matrice active selon la revendication 11, dans lequel le dispositif est à affichage normalement blanc.

13. Procédé d'attaque d'un dispositif d'affichage de type à matrice active selon la revendication 11, dans lequel l'étape de commande du circuit d'attaque de source comporte les étapes: d'indication d'un intervalle de suppression de trame du signal vidéo en fonction du signal de synchronisation; et de fourniture du signal de correction d'affichage à la ligne de signal pendant l'intervalle de suppression de trame et de fourniture du signal vidéo à la ligne de signal pendant la période autre que l'intervalle de suppression de trame.

14. Procédé d'attaque d'un dispositif d'affichage de type à matrice active selon la revendication 11, dans lequel le premier moyen de connexion est un élément à transistor à couches minces.

15. Procédé d'attaque d'un dispositif d'affichage de type à matrice active selon la revendication 14, dans lequel le deuxième moyen de connexion est un élément à transistor à couches minces isolé qui est déconnecté de la ligne de balayage par l'irradiation d'un faisceau laser et dans lequel une électrode du côté de la ligne de signal est connectée électriquement à une électrode du côté de l'électrode de pixel, à travers l'élément à transistor à couches minces isolé, par l'irradiation d'un faisceau laser.

16. Procédé d'attaque d'un dispositif d'affichage de type à matrice active selon la revendication 11, dans lequel le signal vidéo correspond à un système NTSC, PAL ou SECAM.

17. Procédé d'attaque d'un dispositif d'affichage de type à matrice active selon la revendication 11, dans lequel le signal de correction d'affichage est un signal de tension de forme d'onde rectangulaire.

FIG.1.

FIG.2.

FIG.3.

FIG.4.

**FIG.5.**

**FIG.6.**

**FIG.7.**

**FIG.8.**

FIG.9.

FIG.10.

**FIG.11.**
(PRIOR ART)

**FIG.12.**
(PRIOR ART)

FIG.13.

FIG.14.

FIG.15.

FIG.16

FIG.17.